## Europäisches Patentamt

## European Patent Office

## Office européen des brevets

(11) Veröffentlichungsnummer: **0 133 303**
**B1**

# EUROPÄISCHE PATENTSCHRIFT

(45) Veröffentlichungstag der Patentschrift:
**24.05.89**

(21) Anmeldenummer: **84108899.0**

(22) Anmeldetag: **27.07.84**

(51) Int. Cl.⁴: **B 29 C 65/02,** B 29 C 65/74

(54) **Maschine zum Trennen und/oder Schweissen von Bahnen aus thermoplastischer Kunststoffolie.**

(30) Priorität: **30.07.83 DE 3327637**

(43) Veröffentlichungstag der Anmeldung:
**20.02.85 Patentblatt 85/8**

(45) Bekanntmachung des Hinweises auf die Patenterteilung:
**24.05.89 Patentblatt 89/21**

(84) Benannte Vertragsstaaten:
**BE DE FR IT**

(56) Entgegenhaltungen:
**DE-A- 2 235 479**
**DE-B- 1 629 157**
**DE-B- 1 942 410**
**DE-B- 2 051 341**
**DE-B- 2 755 860**

(73) Patentinhaber: **Bendig, Johannes, Talstrasse 72,
D-4018 Langenfeld (DE)**
Patentinhaber: **Bendig, Franz, Talstrasse 72,
D-4018 Langenfeld (DE)**

(72) Erfinder: **Bendig, Johannes, Talstrasse 72,
D-4018 Langenfeld (DE)**
Erfinder: **Bendig, Franz, Talstrasse 72,
D-4018 Langenfeld (DE)**

(74) Vertreter: **Selting, Günther, Dipl.-Ing. et al,
Patentanwälte von Kreisler, Selting, Werner
Deichmannhaus am Hauptbahnhof, D-5000 Köln 1 (DE)**

## Beschreibung

Die Erfindung betrifft eine Folienverarbeitungsmaschine zum Trennen und/oder Schweißen von Bahnen aus thermoplastischer Kunststoffolie zum Herstellen von Zuschnitten, Beuteln, Säcken oder dergleichen mit einer Antriebswelle, die über Nocken den Schweißbalken hin- und hergehend bewegt und vorzugsweise einer weiteren gegenüberliegenden Antriebswelle, die über Nocken auch die Gegenauflage hin- und hergehend bewegt und einem Vorzugswalzenpaar, das die Kunststoffolie absatzweise transportiert.

Solche Maschinen werden zum Beispiel für das Verschweißen oder Trennschweißen von Folienbahnen auf Beutelautomaten benutzt, bei denen eine umgefaltete Folienbahn oder zwei übereinander liegende Kunststoffolien zur Bildung von Beuteln verschweißt werden. Hierbei ist es auch bekannt, die so gebildeten Beutel durch das Schweißen zwischen den Balken voneinander zu trennen. Beide Balken können als beheizte Schweißbalken ausgebildet sein. Es ist auch bekannt, nur eine Schweißbacke zu verwenden und den feststehenden Gegenbalken als gummierte Unterlage auszubilden. Es ist bekannt, die Folienbahn bei vertikaler Erstreckung mit in horizontaler Ebene bewegten Schweißbalken zu verarbeiten oder die Folienbahn in horizontaler Ebene zu bewegen und die Schweißbalken in vertikaler Ebene zu bewegen.

Die DE-A-2 235 479 beschreibt eine Folienverarbeitungsmaschine zum Trennen und/oder Schweißen von Bahnen aus thermoplastischer Kunststoffolie mit einem auf- und abgehenden Schweißbalken, der mit einer feststehenden Gegenschweißbacke zusammenwirkt. Die Auf- und Abbewegung des Schweißbalkens erfolgt über eine Antriebswelle, die an jedem Ende eine Nockenscheibe aufweist. Die Nockenscheiben bewegen zugeordnete Schieber, die an ihren oberen Enden die Halterung für den Schweißbalken tragen. Nach dieser Schrift wird vorgeschlagen, die Schweißdauer des Schweißbalkens zu ändern. Sie ist bei einer bestimmten Drehzahl der Antriebswelle bestimmt durch die Differenz zwischen dem vollen Hub der Schieber und dem durch die Gegenbacke begrenzten Hub der Schweißbacke. Vorhanden sind zwei Verstelleinrichtungen. Zunächst eine erste in Verbindung mit einem Handhebel, der über eine Exenterwelle die Antriebswelle für den Schweißbalken anhebt und absenkt. Diese erste Exenterstellvorrichtung ermöglicht eine Verstellung der Schweißdauer im Betrieb durch Veränderung der obersten Stellung des Schweißbalkens. Um den größten Abstand zwischen den Schweißbalken und dem Gegenbalken über den Hub der Schieber hinaus zu vergrößern, ohne ein Exentergetriebe zu entkoppeln, ist ferner eine zweite Exenterstellvorrichtung vorgesehen, die aus einer Kolben-Zylinder-Anordnung besteht und ebenfalls die Antriebswelle anhebt und absenkt.

Beim Herstellen von Beuteln und anschließendem Stapeln der Beutel an einer unmittelbar an die Trenn- und Schweißvorrichtung angeschlossenen Stapelvorrichtung ist es notwendig, den Stapel an Beuteln, beispielsweise in einer Anzahl von 50 oder 100 Beuteln abzuführen. Während dieser Abführung der Beutel wird die Herstellung des nächsten Beutels oder einiger nächster Beutel unterbrochen. Dies geschieht in der Weise, daß der Antrieb der Trennschweißvorrichtung mit der Zuführung der Folienbahn außer Betrieb gesetzt wird oder ebenfalls bei Abschaltung der Vorzugswalzen der Schweißbalken bei weiterlaufendem Antrieb in eine unwirksame Stellung gebracht wird. Es ist auch bereits vorgeschlagen worden, den Gegenbalken in Gestalt einer gummierten Walze zum Zwecke der Unterbrechung der Beutelherstellung abzusenken, damit sie nicht mit dem weiterhin hin- und hergehenden Schweißbalken in Berührung kommen kann.

Auf Beutelautomaten zum Verarbeiten thermoplastischer Kunststoffolie werden nicht nur Beutel oder Säcke unterschiedlicher Formate und Ausbildungsformen, sondern auch unterschiedliche Folien chemischer Zusammensetzung oder Foliendicke hergestellt. Um diese verarbeiten zu können, ist nicht lediglich eine Änderung der Schweißtemperatur oder der Dauer der Einwirkung des Schweißbalkens notwendig, sondern auch eine Änderung des von dem Schweißbalken ausgeübten Druckes auf die Folienbahn. Diese Änderung des Schweißdruckes ist nicht so sehr erforderlich bei der Ausbildung des Schweißbalkens mit einem keilförmigen Querschnitt zum Herstellen von Trennahtschweißungen, bei dem zugleich mit dem Trennen zu beiden Seiten des Trennschnittes die Schweißnähte angebracht werden. Vielfach angewendet werden aber Schweißbalken mit zwei aneinander in geringem Abstand verlaufenden Schweißflächen, zwischen denen durch ein Messer, manchmal ein umlaufendes Messer, ein Schnitt der Folienbahn durchgeführt wird. Diese Schweißnähte werden als Seitennahtschweißung oder als Doppelbodennahtschweißungen bezeichnet. Die Schweißnähte haben somit eine beachtliche, durch die Bemessung der Schweißfläche des Schweißbalkens erhaltene entsprechend breite Schweißnähte, die in vielen Fällen abhängig von dem zu verarbeitenden Folienmaterial eine Veränderung des Schweißdruckes notwendig machen. Um diese erreichen zu können, sind bei bisherigen Beutelherstellungsmaschinen zwischen dem Schweißbalken und dessen Antrieb Federelemente angeordnet, die auswechselbar sind oder als Druckfedern verstellbar sind. Auswechselbare Federn oder von Hand verstellbare Druckfedern sind umständlich und nicht in schneller Folge zu verändern. So ist es möglich, daß bei bestimmten Verpackungen aus thermoplastischer Kunststoffolie die eine Schweißnaht mit geringem Druck angebracht werden soll, damit die Verbindung leicht lösbar ist, während die nächste Schweißnaht mit höherem Druck angebracht werden soll, damit kein Lösen der beiden miteinander durch die Schweißnaht verbundenen Folienlagen stattfinden kann.

Die vorliegende Erfindung geht von der Aufgabe aus, eine Folienverarbeitungsmaschine zum Trennen und/oder Schweißen von Bahnen aus thermoplastischer Kunststoffolie zu schaffen, bei der der Anpreßdruck des Schweißbalkens einstellbar ist und mit einfachen Mitteln eine Unterbrechung des Trenn- und/oder Schweißvorganges stattfinden kann.

Zur Lösung dieser Aufgabe wird bei einer Folienverarbeitungsmaschine zum Trennen und/oder Schweißen von Bahnen aus thermoplastischer Kunststoffolie zum Herstellen von Zuschnitten, Beuteln, Säcken oder dergleichen mit einer Antriebswelle, die über Nocken den Schweißbalken hin- und hergehend bewegt und vorzugsweise einer weiteren Antriebswelle, die über Nocken auch die Gegenauflage hin- und hergehend bewegt und vorzugsweise einer weiteren Antriebswelle, die über Nocken auch die Gegenbacke hin- und hergehend bewegt, das die Kunststoffolie absatzweise transportiert, erfindungsgemäß vorgeschlagen, daß zur Veränderung des Anpreßdruckes die Antriebswelle oder die beiden Antriebswellen und/oder die Vorzugswalzen im Maschinengestell durch eine im Druck regelbare hydraulische pneumatische Kolben-Zylinder-Anordnung verschiebbar gelagert ist oder sind.

Durch die erfindungsgemäße Lösung, den Schweißdruck durch einen hydraulischen, aber besonders vorteilhaft durch einen pneumatischen Druck zu regulieren, läßt sich schnell und fein dosierbar der Schweißdruck verändern. Die erfindungsgemäße Lösung macht nunmehr die Anwendung von Druckfedern unnötig, so daß eine einfache Ausbildung möglich ist.

Der erfindungsgemäße Grundvorschlag, hydraulisch oder pneumatisch den Schweißdruck durch unterschiedliche Verschiebung des Schweißbalkens auf die Folienlage regulieren zu können, macht es auch möglich, den Schweißbalken so weit von der Bewegungsbahn der Folie wegzuführen, daß eine Schweißunterbrechung stattfinden kann. Durch den Vorschlag, die Vorzugswalze 29 durch eine druckregelbare hydraulische oder pneumatische Kolben-Zylinder-Anordnung verschiebbar zu lagern, läßt sich auf einfache Weise der Folienvorschub regeln, so daß die Anordnung einer bisher üblichen Kupplung und Bremse, die einem Verschleiß unterliegen, nicht mehr notwendig ist.

Somit sind die Grundmittel zur veränderbaren Einstellung des Schweißdruckes und zur Außerbetriebstellung des Schweißbalkens gleich.

In weiterer erfindungsgemäßer Ausgestaltung wird vorgeschlagen, daß der Schweißbalken im Maschinengestell hin- und hergehend verschiebbar gelagert ist und in gleicher Ebene und gleicher Erstreckung die Antriebswelle im Maschinengestell sowie die Kolbenstange der Kolben-Zylinder-Anordnung verschiebbar gelagert ist.

Durch diese Lösung ergibt sich eine einfache Ausbildung, weil die Schweißbalken und die Antriebswelle zu deren Betätigung in gleichen Führungsbahnen vorhanden sein können, wobei der Schweißbalken ständig, die Antriebswelle jedoch lediglich wahlweise verschoben wird.

Die vorbeschriebene Lösung ist besonders einfach in Verbindung mit der weiteren Maßgabe, daß der pneumatische Zylinder am Maschinengestell gelagert ist und die Kolbenstange an dem Lager der Antriebswelle befestigt ist.

In Verbindung mit der an sich bekannten Maßgabe, daß der Schweißbalken mit einer Tastrolle an dem Nocken der Antriebswelle anliegt, wird in weiterer erfindungsgemäßer Ausgestaltung vorgeschlagen, daß der Schweißbalken an dem Nocken der Antriebswelle durch ein auf Zug beanspruchtes Verbindungselement anliegt. Dieses Verbindungselement kann ein Gummistropp oder eine Zugfeder sein.

In weiterer erfindungsgemäßer Ausgestaltung wird zur Schweißunterbrechung eine solche Bemessung des Verschiebeweges der Antriebswelle und der Verbindung der Kolben-Zylinder-Anordnung mit dem Schweißbalken vorgeschlagen, daß die Kolben-Zylinder-Anordnung den Schweißbalken zusammen mit der Antriebswelle bei weiterlaufendem Antrieb durch die Antriebswelle in eine Leerlaufstellung bzw. Neutralstellung verschiebt.

Die Unterbrechung einer Schweißung bzw. Herstellung eines Beutels oder mehrerer Beutel während der Zeitdauer des Wegtransportes eines Beutelstapels kann jedoch auf andere einfache Weise erfolgen.

In weiterer erfindungsgemäßer Ausgestaltung wird vorgeschlagen, daß die eine Vorzugswalze 29 an dem einen Ende 51 eines doppelarmigen Hebels 52 gelagert ist und an dem anderen Ende 54 die Kolbenstange 57 des Zylinders 58 angreift, der am Maschinengestell 11 gelagert ist.

Dieser erfindungsgemäße Vorschlag des Auseinanderspreizens der Vorzugswalzen bei deren weiteren Antrieb wird somit eine sehr einfache und schnell wirksame Unterbrechung des Vorschubes der Folienbahn erreicht, die schnell im Takt der Herstellung eines Beutels erfolgen kann.

Die Erfindung ist in der Zeichnung beispielhaft erläutert:

Es zeigen:

Fig. 1 eine Schweiß- und Trennvorrichtung in Seitenansicht, teilweise im Schnitt,

Fig. 2 die Darstellung nach Fig. 1 bei anliegender Schweiß- und Trenneinrichtung,

Fig. 3 die Darstellung nach Fig. 1 in der Ansicht von oben, teilweise im Schnitt,

Fig. 4 eine Fig. 1 gegenüber abgewandelte Trenn- und Schweißvorrichtung.

An der Maschine zum Trennen und Schweißen von thermoplastischen Kunststoffolienbahnen sind in beiden Seitenwangen 11, 11a die Antriebswellen 12 und 13 vorhanden, die paarweise und im Abstand nebeneinander Nockenscheiben 13 und 14 haben, an denen jeweils zugeordnet die Rollen 15 und 16 anliegen, die über zugeordnete Auslegerelemente 17 und 18 mit der Trenn-Schweißeinrichtung 19 verbunden sind, die auf der linken Seite aus einer Gegenschweißauflage 20 mit den Schweißflächen 21 und 21a besteht, die mit dem Schweißbalken 22 mit den Schweißflächen 23 und 23a zusammenwirkt, der auch das Schneidmesser 24 hat. Die in gestrichelter Linie dargestellte Folienbahn 25 wird über Umlenkwalzen 26 und 27 dem Vorzugswalzenpaar 28 und 29 zugeführt. Nach dem Ausführungsbeispiel ist die Vorzugswalze 29 mit einem Antrieb versehen, während die Vorzugswalze 28, sofern die Vorzugswalze 29 an dieser anliegt, lose mitläuft.

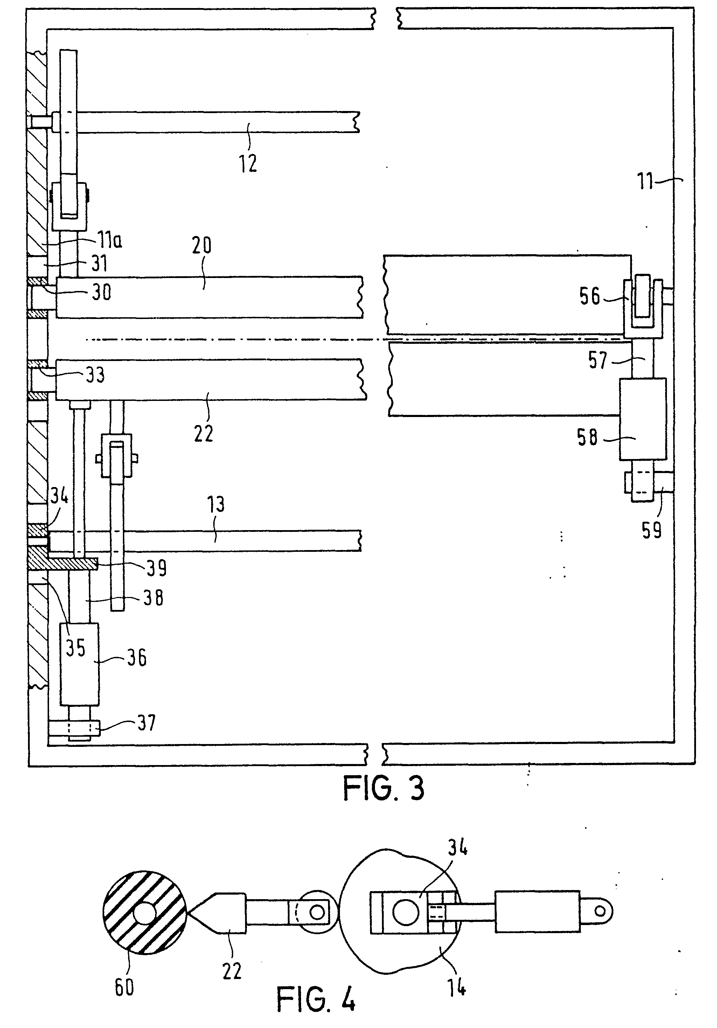

Fig. 3 zeigt in der rechten Hälfte die Oberansicht der beiden Vorzugswalzen 28 und 29 und deren Verstelleinrichtung – die später noch beschrieben werden wird – und im linken Teil die Lagerung der Trenn- und Schweißvorrichtung 19 sowie deren Antrieb mit Verstelleinrichtungen, die zunächst beschrieben werden.

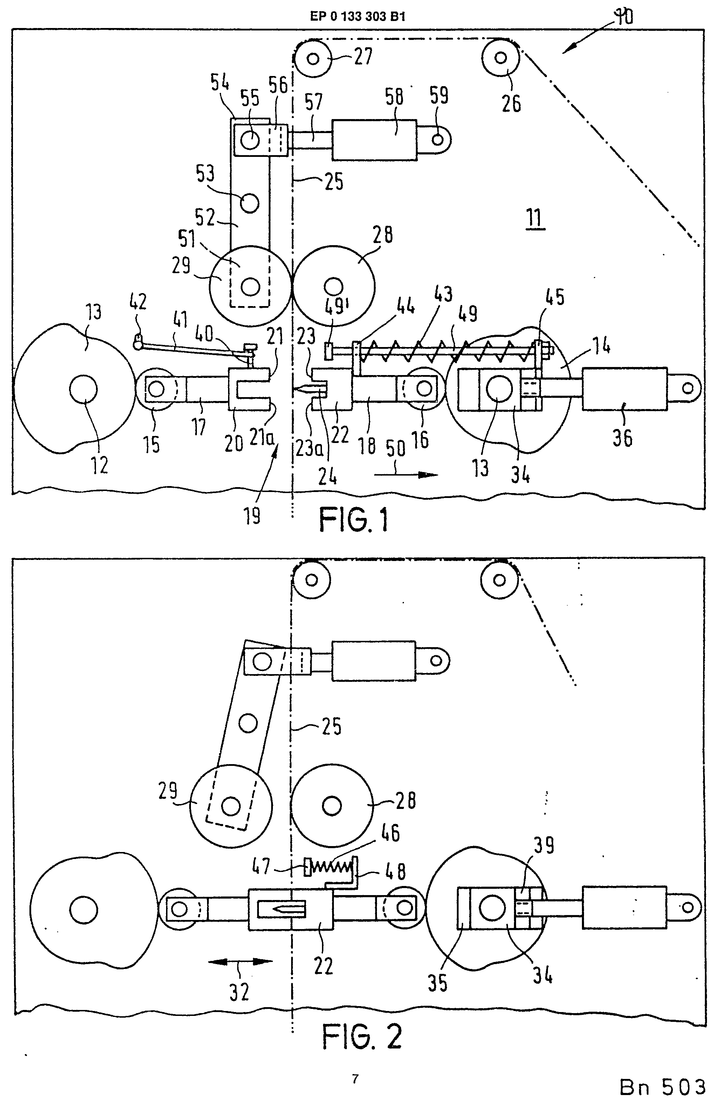

Die Antriebswelle 12 mit einem nicht dargestellten Antrieb ist in den beiden Seitenrahmen 11 und 11a ortsfest gelagert. Die Gegenschweißauflage 20 hat ein Lager 30, das in einer durch Ausnehmung im Seitenrahmen erhaltenen Führung 31 gelagert ist, so daß die Gegenschweißauflage in der in Fig. 2 dargestellten Doppelpfeilrichtung 32 hin- und hergehend verschiebbar gelagert ist. In gleicher Weise ist der Schweißbalken 22 mit einem Lager 33 versehen, das in einer getrennten oder gleichen Führung 31 in angegebener Doppelpfeilrichtung 32 hin- und hergehend verschiebbar ist. Zusätzlich ist die Antriebswelle 13 mit einem Lager 34, das in einer ebenfalls als Ausnehmung in den Seitenrahmen 11 und 11a dargestellten Führung 35 in der angegebenen Doppelpfeilrichtung 32 hin- und hergehend verschiebbar ist. Diese Verschiebung wird erreicht durch einen Pneumatikzylinder 36, der an seinem hinteren Ende über einen Zapfen 37 mit der Seitenwandung 11a verbunden ist. Entsprechend ist auch an der Seitenwandung 11 ein spiegelbildlich angeordneter Pneumatikzylinder 36 vorhanden. Dessen Kolbenstange 38 greift an einem von dem Lager 34 ausgehenden Fortsatz 39 an, so daß die Kolbenstange 38 das Lager 34 verschiebt. Während durch die rotierenden Nocken 13 und 14 die Gegenbacke 20 und der Schweißbalken 22 im Takt der Beutelherstellung hin- und hergehend bewegt werden, um aus der Folienbahn 25 Beutel abzutrennen und zu verschweißen, wird durch die Kolbenstange 38 auf den Schweißbalken 22 ein regulierbarer Druck ausgeübt, der abhängig ist von dem im Zylinderraum auf den dort befindlichen Kolben ausgeübten Druck. Dieser Druck läßt sich durch bekannte verstellbare Druckminderventile oder dergleichen bekannte Regeleinrichtungen regulieren.

Um zur exakten Steuerung eine ständige Anlage der Rolle 15 an dem Exzenter 13 zu erreichen, ist an dem Balken 20 über einen Stift 40 ein Gummistropp 41 angeordnet, der über eine Halterung 42 an der Seitenwand 11 befestigt ist.

Eine gleiche Wirkung kann auch erreichen eine Zugfeder 43, die über einen am Schweißbalken 22 angeordneten Flansch 44 mit einem nach oben verlängerten Teil 45 des Auslegers 39 verbunden ist. Eine gleiche Wirkung kann auch erreichen eine Druckfeder 46, die sich mit dem einen Ende an dem am Seitenrahmen 11 befestigten Anschlag 47 und dem anderen Ende mit einem Anschlag 48 abstützt, der von dem Schweißbalken 22 ausgeht.

Besonders vorteilhaft ist die in Fig. 1 und auch in Fig. 3 dargestellte Lösung, daß an dem Schweißbalken 22 und der Kolbenstange 38 eine Zugstange 49 befestigt ist. Dadurch kann bei weiterlaufender Rotation die Antriebswelle zur Erzeugung von Leertakten während des Zeitraumes der Abführung eines Beutelstapels der Schweißbalken in eine neutrale Stellung verschoben werden, weil der an der Zugstange 49 angeordnete Kopf 49a an dem Anschlag 44 anschlägt und damit über die Kolbenstange mit der Verschiebung des Lagers 34 auch der Schweißbalken 22 nach rechts in eine wirksame Stellung verschoben wird.

Diese Maßnahme der Verschiebung der Antriebswelle 13 mit dem Schweißbalken 22 in angegebener Pfeilrichtung 50 zum Zwecke der Erzeugung eines Leertaktes kann auch ersetzt sein oder in Verbindung mit der Maßgabe erfolgen, daß die angetriebene Vorzugswalze 29 an dem einen Ende 51 eines doppelarmigen Hebels 52 gelagert ist, der um die Achse 53 schwenkbar ist, während an dem anderen Ende 54 über einen Drehzapfen 55 und eine Gabel 56 die Kolbenstange 57 eines Zylinders 58 angreift, der über einen Bolzen 59 an der Seitenwandung 11 und entsprechend in spiegelbildlicher Ausbildung auch an der gegenüberliegenden Seitenwandung 11 vorhanden ist. Während Fig. 1 die Anordnung zeigt, bei der die Vorzugswalzen 29 und 28 einander anliegen, zeigt Fig. 2 die Anordnung, bei der die Vorzugswalze 29 von der Walze 28 abgehoben und somit der Vorschub der Folienbahn 25 trotz weiterlaufender angetriebener Vorzugswalze 29 ausgeschlossen ist.

Fig. 4 zeigt, daß die in Fig. 1 dargestellte Gegenbacke 20 in Gestalt einer ortsfest gelagerten gummierten Walze 60 ausgebildet ist. In einem solchen Falle ist der Schweißbalken 22 im Querschnitt als Keil 22a ausgebildet und erzeugt somit eine Trenn-Naht-Schweißung.

Das Abheben der einen Walze von der anderen durch die pneumatische Kolben-Zylinder-Anordnung kann auch dem Zweck dienen, das Einführen der Folienbahn zwischen den Vorzugswalzen zu vereinfachen.

**Patentansprüche**

1. Folienverarbeitungsmaschine zum Trennen und/oder Schweißen von Bahnen aus thermoplastischer Kunststoffolie zum Herstellen von Zuschnitten, Beuteln, Säcken oder dergleichen, mit einer Antriebswelle (12), die über Nocken (12a) den Schweißbalken (20) hin- und hergehend bewegt und vorzugsweise einer weiteren gegenüberliegenden Antriebswelle (13), die über Nocken (14) auch die Gegenauflage (22, 60) hin- und hergehend bewegt und einem Vorzugswalzenpaar (28, 29), das die Kunststoffolie absatzweise transportiert, dadurch gekennzeichnet, daß zur Veränderung des Anpreßdruckes die Antriebswelle (13) oder die beiden Antriebswellen (12, 13) und/oder die Vorzugswalze (19) im Maschinengestell (11, 11a) durch eine im Druck regelbare hydraulische oder pneumatische Kolben-Zylinder-Anordnung (36, 38, 57, 58) verschiebbar gelagert ist oder sind.

2. Maschine nach Anspruch 1, dadurch gekennzeichnet, daß der Schweißbalken (22) im Maschinengestell (11, 11a) hin- und hergehend verschiebbar gelagert ist und in gleicher Ebene und in gleicher Richtung die Antriebswelle (13) im Maschinengestell (11, 11a) sowie die Kolbenstange der Kolben-Zylinder-Anordnung verschiebbar gelagert ist.

3. Maschine nach den Ansprüchen 1 und 2, dadurch gekennzeichnet, daß der pneumatische Zylinder (36) am Maschinengestell (11) gelagert ist und die Kolbenstange (38) an dem Lager (34) der Antriebswelle (13) befestigt ist.

4. Maschine nach den Ansprüchen 1 bis 3, wobei der Schweißbalken mit einer Tastrolle an dem Nocken der Antriebswelle anliegt, dadurch gekennzeichnet, daß der Schweißbalken (22) mit der Antriebswelle (13) durch ein auf Zug beanspruchtes Verbindungselement (41, 43) verbunden ist.

5. Maschine nach Anspruch 4, dadurch gekennzeichnet, daß das Verbindungselement ein Gummistropp (41) ist.

6. Maschine nach Anspruch 5, dadurch gekennzeichnet, daß das Verbindungselement aus einer Zugfeder (43) besteht.

7. Maschine nach Anspruch 1 und einem oder mehreren der Ansprüche 2 bis 6, gekennzeichnet durch eine solche Bemessung des Verschiebeweges der Antriebswelle (13) und der Verbindung der Kolben-Zylinder-Anordnung (36, 38) mit dem Schweißbalken (22), daß die Kolben-Zylinder-Anordnung (36, 38) den Schweißbalken (22) zusammen mit der Antriebswelle (13) von der Arbeitsstellung bei weiterlaufendem Antrieb durch die Antriebswelle (13) in eine Leerlaufstellung verschiebt.

8. Maschine nach Anspruch 1, dadurch gekennzeichnet, daß die eine Vorzugswalze (29) an dem einen Ende (51) eines doppelarmigen Hebels (52) gelagert ist und an dem anderen Ende (54) die Kolbenstange (57) des Zylinders (58) angreift, der am Maschinengestell (11) gelagert ist.

## Claims

1. A foil processing machine for parting and/or welding webs of thermoplastic synthetic foil for producing blanks, bags, sacks or the like, comprising a drive shaft (12) reciprocally moving the welding bar (20) by means of cams (12a) and, preferably, a further, opposite drive shaft (13) also reciprocally moving the counter support (22, 60) by means of cams (14) and a pair of drawing rolls (28, 29) intermittently moving the synthetic foil, characterised in that for changing the roll pressure, the drive shaft (13) or the two drive shafts (12, 13) and/or the drawing roll (19) is/are supported in the machine frame (11, 11a), such that they are displaceable by a pressure regulatable hydraulic or pneumatic piston-cylinder arrangement (36, 38, 57, 58).

2. The machine according to Claim 1, characterised in that the welding bar (22) is supported in the machine frame (11, 11a) to be reciprocally displaceable and that the drive shaft (13), provided in the machine frame (11, 11a), as well as the piston rod of the piston-cylinder arrangement, are displaceably supported in the same plane and in the same direction.

3. The machine according to Claims 1 and 2, characterised in that the pneumatic cylinder (36) is supported at the machine frame (11) and that the piston rod (38) is mounted on the bearing (34) of the drive shaft (13).

4. The machine according to Claims 1 to 3, wherein the welding bar contacts the cam of the drive shaft with a sensing roller, characterised in that the welding bar (22) is connected with the drive shaft (13) by a tension-loaded connecting element (41, 43).

5. The machine according to Claim 4, characterised in that the connecting element is a rubber strap (41).

6. The machine according to Claim 5, characterised in that the connecting element consists of a tension spring (43).

7. The machine according to Claim 1 and one or more of Claims 2 to 6, characterised in that the path of displacement of the drive shaft (13) and the connection between the piston-cylinder arrangement (36, 38) and the welding bar (22) are dimensioned such that the piston-cylinder arrangement (36, 38) shifts the welding bar (22) together with the drive shaft (13) from the operating position into an idle position while the drive shaft (13) is still driving.

8. The machine according to Claim 1, characterised in that one drawing cylinder (29) is supported on the one end (51) of a double-armed lever (52) and that the piston rod (57) of the cylinder (58) supported at the machine frame (11) engages at the other end (54).

## Revendications

1. Machine de traitement d'un produit en feuille, pour couper et/ou souder des bandes d'un matériau thermoplastique en feuille, pour fabriquer des portions, des sachets, des petits sacs ou analogues, comportant un arbre d'entraînement (12), qui, par l'intermédiaire d'une came (12a), donne un mouvement de va-et-vient à la barre de soudage (20) et comportant de préférence un autre arbre d'entraînement (13) situé en face qui, par l'intermédiaire d'une came (14), donne également un mouvement de va-et-vient à la contre-surface d'appui (22, 60), et comportant aussi une paire de rouleaux d'avancement (28, 29) qui transportent la feuille de plastique par tronçons, caractérisée en ce que, pour modifier la pression de pressage, l'arbre d'entraînement (13) ou les deux arbres d'entraînement (12, 13) et/ou le rouleau d'avancement (19) est porté, ou sont portés, avec liberté de coulissement, dans le bâti (11, 11a) de la machine au moyen d'un dispositif piston-cylindre hydraulique ou pneumatique (36, 38, 57, 58) réglable en pression.

2. Machine selon la revendication 1, caractérisée en ce que la barre de soudage (22) est portée dans le bâti (11, 11a) de la machine avec liberté de coulissement en va-et-vient et en ce que, dans le même plan et dans la même direction, l'arbre d'entraînement (13) est porté, avec liberté de coulissement, dans le bâti (11, 11a) de la machine ainsi que la tige de piston du dispositif piston-cylindre.

3. Machine selon les revendications 1 et 2, caractérisée en ce que le vérin pneumatique (36) est monté sur le bâti (11) de la machine et en ce que la tige de piston (38) est fixée au palier (34) de l'arbre d'entraînement (13).

4. Machine selon les revendications 1 à 3, dans laquelle la poutre de soudage s'appuie, par un galet palpeur, contre la came de l'arbre d'entraînement, caractérisée en ce que la poutre de soudage (22) est reliée à l'arbre d'entraînement (13) par un élément de liaison (41, 43) contraint en traction.

5. Machine selon la revendication 4, caractérisée en ce que l'élément de liaison est un ruban de caoutchouc (41).

6. Machine selon la revendication 5, caractérisée en ce que l'élément de liaison est constitué d'un ressort de traction (43).

7. Machine selon la revendication 1 et une ou plusieurs des revendications 2 à 6, caractérisée par un dimensionnement de la course de coulissement de l'arbre d'entraînement (13) et de la liaison du dispositif piston-cylindre (36, 38) avec la poutre de soudage (22) tel que, lorsque l'arbre d'entraînement (13) poursuit sa fonction, le dispositif piston-cylindre (36, 38) fait coulisser la poutre de soudage (22), ainsi que l'arbre d'entraînement (13), pour passer de la position de travail à une position de marche à vide.

8. Machine selon la revendication 1, caractérisée en ce que le premier rouleau d'avancement (29) est monté à la première extrémité (51) d'un levier (52) à double bras et qu'à l'autre extrémité (54) s'applique la tige de piston (57) du cylindre (58) qui est monté sur le bâti (11) de la machine.

FIG.1

FIG. 2

Bn 503

FIG. 3

FIG. 4

Bn 503